# EUROPÄISCHE PATENTSCHRIFT

(11) **EP 1 708 570 B1**
(45) Veröffentlichungstag und Bekanntmachung des Hinweises auf die Patenterteilung: **08.08.2012**
(21) Anmeldenummer: 05701170.2
(22) Anmeldetag: 25.01.2005
(51) Int. Cl.: A01N 31/16, A01N 37/02

(54) **Zusammensetzung und deren Verwendung als Attraktans für Gartenlaublaubkäfer (Phyllopertha horticola)**
Composition and use thereof as attractant for the garden chafer (Phyllopertha horticola)
Composition et son utilisation en tant que substance attractive pour hannetons de jardin (Phyllopertha horticola)

(30) Priorität: 30.01.2004 DE 102004004900
(43) Veröffentlichungstag der Anmeldung: 11.10.2006
(73) Patentinhaber: Freie Universität Berlin, 14195 Berlin (DE)
(72) Erfinder: RUTHER, Joachim, 93049 Regensburg (DE)
(74) Vertreter: Engelhard, Markus
(86) Internationale Anmeldenummer: PCT/EP2005/000709
(87) Internationale Veröffentlichungsnummer: WO 2005/072526

(56) Entgegenhaltungen:
- WO-A-02/49600
- US-B1- 6 268 333
- LADD T L JR: "JAPANESE BEETLE POPILLIA-JAPONICA ENHANCEMENT OF LURES BY EUGENOL AND CAPROIC-ACID" JOURNAL OF ECONOMIC ENTOMOLOGY, Bd. 73, Nr. 5, 1980, Seiten 718-720, XP001206996 ISSN: 0022-0493
- BORG-KARLSON A-K: "ATTRACTION OF PHYLLOPERTHA-HORTICOLA COLEOPTERA SCARABAEIDAE MALES TO FRAGRANCE COMPONENTS OF OPHRYS FLOWERS ORCHIDACEAE SECTION FUCIFLORAE" ENTOMOLOGISK TIDSKRIFT, Bd. 109, Nr. 3-4, 1988, Seiten 105-109, XP009051145 ISSN: 0013-886X
- RUTHER JOACHIM: "Male-biassed response of garden chafer, Phyllopertha horticola L., to leaf alcohol and attraction of both sexes to floral plant volatiles" CHEMOECOLOGY, Bd. 14, Nr. 3-4, 2004, Seiten 187-192, XP002337901 ISSN: 0937-7409

## Beschreibung

Die vorliegende Erfindung betrifft eine Zusammensetzung und deren Verwendung als Attraktans für Gartenlaubkäfer (*Phyllopertha horticola*)*.* Die Erfindung betrifft weiterhin eine Falle, umfassend die erfindungsgemäße Zusammensetzung, sowie ein Verfahren zum Anlocken von Gartenlaubkäfern.

Pflanzenfressende Insekten können insbesondere nach Massenvermehrungen erhebliche wirtschaftliche und ökologische Schäden verursachen. Da der Einsatz von Insektiziden in der Regel wenig selektiv ist und neben den Zielorganismen auch Nützlinge erfasst, stellt die Suche nach alternativen Bekämpfungsstrategien ein Hauptziel der angewandten Insektenforschung dar. Neben selektiv wirkenden natürlichen Antagonisten (z. B. Parasitoide, Prädatoren oder Entomopathogene) stellt der Einsatz von Lockstoffen eine umweltschonende Option dar, um aus dem natürlichen Gleichgewicht geratene Schädlingspopulationen auf ein verträgliches Maß zu reduzieren. Bislang zur Kontrolle phytophager Insekten eingesetzte Attraktantien lassen sich in zwei Gruppen einteilen: Sexualllockstoffe und Pflanzenduftstoffe. Nicht selten kann durch Kombination von Sexuallockstoffen mit Duftstoffen, die von potentiellen Nahrungsquellen des Zielorganismus stammen, eine additive oder sogar synergistische Steigerung der Attraktivität erreicht werden. Potentielle Einsatzmöglichkeiten von Insektenlockstoffen sind z.B. (Howse et al., (1998) "Insect Pheromones and their use in pest management" Chapman & Hall, London, 369pp.) der Massenfang (mass trapping), welcher eine Reduktion der Gesamtpopulation durch Lockstofffallen bewirkt; die Verwirrtechnik (mating disruption), welche durch Überflutung eines Areals mit synthetischen Sexuallockstoffen eine Orientierung der Zielorganismen zu den natürlichen Lockstoffen (= Sexualpartner) verhindert und das sogenannte Monitoring, welches die Entwicklung von Schädlingspopulationen kontrolliert um Massenvermehrungen rechtzeitig zu erkennen und den geeigneten Zeitpunkt für Bekämpfungsmaßnahmen zu bestimmen.

Innerhalb der Käferfamilie der Scarabaeidae (Blatthornkäfer) gibt es weltweit zahlreiche. Schädlinge (Leal (1998) Ann. Rev. Entomol. 43, 39-61). Sowohl die Adulten als auch die Larven phytophager Scarabaeiden können erhebliche Schäden in Land- und Forstwirtschaft sowie im Zierpflanzen- und Obstbau verursachen. Während die ausgewachsenen Insekten Fraßschäden an oberirdischen Pflanzenteilen (Blätter, Blüten und Früchte) verursachen, fressen die bodenbewohnenden Larven (Engerlinge) an den Wurzeln der betroffenen Pflanzen und nehmen diesen somit die Möglichkeit zur Wasser- und Nährstoffaufnahme. In Mitteleuropa sind es neben den beiden einheimischen Maikäferarten *Melolontha hippocastani* (Waldmaikäfer) und *M. melolontha* (Feldmaikäfer) vor allem der Junikäfer *Amphimallon solstitiale* und der Gartenlaubkäfer *Phyllopertha horticola,* die wirtschaftlich und ökologisch relevante Schäden verursachen. Obgleich die genannten Schädlinge alles Blatt- und Wurzelfraßschädlinge sind, lassen sich Bekämpfungsmaßnahmen, die für einen Schädling funktionieren, nicht ohne weiteres auf andere Schädlinge aufgrund deren unterschiedlicher Biologie und Wirtsspezifität übertragen. Der Gartenlaubkäfer ist Gegenstand der vorliegenden Erfindung.

Die Entwicklung des Gartenlaubkäfers ist ein- bis zweijährig. Nach der Eiablage im Frühsommer fressen die Larven (3 Larvalstadien) die Wurzeln von Gräsern, Kulturpflanzen und Baumbeständen und verursachen hierbei oft großflächige Schäden auf Wiesen sowie auf Zier- und Sportrasenflächen (z. B. Golfplätze) (Strasser et al. (1996) Der Planzenarzt 9/10,22-24). Die adulten Käfer erscheinen zwischen Ende Mai und Anfang Juli. In den Morgenstunden bis zum Frühnachmittag kann an sonnigen Tagen ein Schwärmflug beobachtet werden. Die Schwärmperiode des Gartenlaubkäfers kann in 2 Phasen unterteilt werden: in Phase 1, der wichtigsten Paarungsphase, schwärmen fast ausschließlich Männchen dicht über der Grasnarbe und landen gezielt neben den Weibchen, die in dieser Phase den Boden mit reifen Eiern nur kurz zur Paarung verlassen und danach dann sofort wieder zu einer ersten Eiablage in den Boden zurückkehren. In dieser Phase findet kein oder wenig Fraß durch die Weibchen statt. In Phase 2, die etwa eine Woche nach dem Erscheinen der ersten Käfer einsetzt, schwärmen dann beide Geschlechter um Farne, Bäume und Hecken. Die adulten Käfer fressen dann an Blättern und Blüten zahlreicher Pflanzenarten, wobei während dieser Zeit verstärkte Paarungsaktivität in Blüten beobachtet werden kann. Nach diesem Reifungsfraß legen die Weibchen ein zweites Mal Eier im Boden ab (Milne (1959) Bull. Entomol. Res. 50, 467-486; Milne (1960) Bull. Entomol. Res. 51, 353-378).

In den letzten Jahren haben die Probleme mit dem Gartenlaubkäfer deutlich zugenommen. Der Einsatz von Insektiziden zur Bekämpfung des Gartenlaubkäfers ist nur in Ausnahmefällen und mit Sondergenehmigung erlaubt, wobei sich dieser nur gegen die Engerlinge richten kann. Der Einsatz von Insektiziden gegen die Adulten ist dagegen nicht vertretbar, da wegen deren "Lebensraum Blüten" auch andere Blütenbesucher, z.B. Honigbienen betroffen wären. Daher besteht ein dringender Bedarf nach umweltverträglichen Bekämpfungsmitteln für diesen Käfer. Obwohl bei der Bekämpfung von einigen verwandten nichteuropäischen Arten Lockstoffe seit langem erfolgreich eingesetzt werden, waren bislang für den Gartenlaubkäfer weder Sexuallockstoffe noch attraktive Pflanzenduftstoffe bekannt.

Gewisse Erfolge wurden in jüngerer Zeit durch den Einsatz von natürlichen Feinden der Käferlarven erzielt. Besonders entomopathogene Nematoden, insbesondere von *Heterorhabditis bacteriophora,* sind im Handel erhältlich. Diese Nematoden leben mit Bakterien der Gattung Photorabdus in Symbiose. Nach dem Eindringen der Nematode durch natürliche Öffnungen (Mund, After) in die Käferlarve werden die Bakterien abgegeben. Nach ca. 3 Tagen stirbt die Larve ab. Danach kann sich die Nematode selbst vermehren, da sie von den Bakterien und deren Abbauprodukten lebt. In zwei Wochen ist die Larve verzehrt. Bis zu 300.000 Nematoden-Dauerlarven suchen, wenn der Boden feucht genug ist, aktive neue Larven des Gartenlaubkäfers. Versuche haben gezeigt, daß die Dauerlarven mehrere Jahre im Boden überdauern können. Die Nematoden werden meist mit der Spritze ausgebracht. Sie sind anschließend einzuregnen. Nach der Ausbringung ist der Boden mindestens zwei Wochen lang gut feucht zu halten, da die Nematoden zum Wandern einen Wasserfilm benötigen. *Heterohabditis bacteriophora* ist nicht hitzestabil, benötigt aber mindestens 12°C. Obgleich hiermit gewisse Erfolge erzielt wurden, besteht dennoch weiterhin ein Bedarf für alternative Schädlingsbekämpfungsmethoden für den Gartenlaubkäfer. Insbesondere besteht ein Bedarf nach Methoden und Mitteln zur Bekämpfung des Gartenlaubkäfers, die von dem Feuchtigkeitszustand des Bodens unabhängig ist.

Eine Aufgabe der vorliegenden Erfindung ist es demnach, ein Mittel zur Verfügung zu stellen, welches zur Bekämpfung und/oder Populationssteuerung der Gartenlaubkäfer eingesetzt werden kann.

Eine weitere Aufgabe der Erfindung ist es, ein Mittel bereitzustellen, das unabhängig vom Feuchtigkeitszustand des Bodens wirksam ist.

Diese Aufgaben werden durch eine Zusammensetzung gelöst, enthaltend
- mindestens eine Phenylpropanverbindung, ausgewählt aus der Gruppe, umfassend Eugenol und Eugenolderivate die aus den folgenden Verbindungen ausgewählt sind: Isoeugenol, Isoeugenylacetat, Isoeugenylmethylether, Isoeugenylphenylacetat, Eugenylacetat, Eugenylmethylether ; Anethol,
- mindestens eine Phenylverbindung, ausgewählt aus der Gruppe, umfassend 2-Phenylethylpropionat, 2-Phenylethanol, 2-Phenylethylbutyrat und 2-Phenylethylacetat, und
- mindestens ein Hexanderivat, die aus den folgenden Verbindungen ausgewählt sind: (Z)-3-Hexen-l-ol, (E)-2-Hexen-l-ol, Hexan-1-ol,
und mindestens eine Terpenverbindung die aus den folgenden Verbindungen ausgewählt sind: Geraniol, Geranylformiat, Geranylacetat, Geranylpropionat, Geranybenzoat, Geranylbutyrat, Geranylisovalevat, Geranyltiglat, Nerylformiat, Nerylacetat, Nerylpropionat, Nerylbenzoat, Nerylbutyrat, Nerylisovalerat, Neryltiglat, Linalylformiat, Linalylacetat, Linalylpropionat, Linalylbenzoat, Linalylbutyrat, Linalylisovalerat, Linalyltiglat, Citronellol, Citronellylformiat, Citronellylacetat, Citronellylpropionat, Citronellylbenzoat, Citronellylbutyrat, Citronellylisovalerat, Citronellyltiglat. .

Weiterhin ist bevorzugt, daß die erfindungsgemäße Zusammensetzung Benzylalkohol und/oder Methylanthranilat umfaßt.

In einer bevorzugten Ausführungsform ist das mindestens eine Hexanderivat ein lineares, verzweigtes, gesättigtes oder ungesättigtes Hexanderivat, wobei bevorzugt ist, daß das Hexanderivat ein Aldehyd, Alkohol, Ester mit Carbonsäuren mit bis zu 6 Kohlenstoffatomen oder eine Kombination aus zwei oder mehreren der genannten Verbindungen ist.

In einer bevorzugten Ausführungsform beträgt das Verhältnis von Terpenverbindung: Phenylpropanverbindung: Phenylverbindung 3:7:3.

In einer besonders bevorzugten Ausführungsform beträgt das Verhältnis der Mischung aus Phenylpropanverbindung/Phenylverbindung/Terpenverbindung zu Hexanderivat 10:1 1 zu 1:10, bevorzugt 0,5:1 zu 1:2, besonders bevorzugt 1:1.

Die Aufgaben der Erfindung werden auch gelöst durch die oben beschriebene erfindungsgemäße Zusammensetzung als Attraktans für Gartenlaubkäfer.

Für den Japankäfer *Popillia japonica* ist seit Anfang der Achtziger Jahre bekannt, dass das synthetische Blütenduftstoffgemisch ("floral lure") aus den Komponenten Geraniol, Eugenol, und 2-Phenylethylpropionat im Verhältnis 3:7:3 (Ladd, T.L.; McGovern, T.P.(1980) J. Econ. Entomol. 73, 689-691) zur Anlockung verwendet werden kann. Dieses Gemisch ist attraktiv für beide Geschlechter des Japankäfers. Überraschenderweise wurde durch eine erfindungsgemäße Ausführungsform gezeigt, dass das Blütenduftstoffgemisch aus Geraniol, Eugenol und 2-Phenylethylpropionat auch für den Gartenlaubkäfer als Attraktans verwendet werden kann.

Weiterhin enthält die Zusammensetzung der vorliegenden Erfindung zusätzlich ein Hexanderivat, bspw. (Z)-3-Hexen-1-ol. Durch den grünen Blattduftstoff (Z)-3-Hexen-1-ol werden fast ausschließlich Männchen des Gartenlaubkäfers angelockt. Speziell durch die Kombination der Blütenduftstoffe wie z.B. Geraniol, Eugenol und 2-Phenylethylpropionat mit dem Blattduftstoff (Z)-3-Hexen-1-ol wird nun eine deutliche Erhöhung der Gesamtzahl gefangener Käfer durch die verstärkte Anlockung der Männchen bewirkt. Ein hiervon zu unterscheidender Effekt wurde bereits für den Japankäfer beschrieben, bei dem durch eine Kombination der Blütenduftstoffe mit dem weiblichen Sexualpheromon 5-(1-decenyl)dihydro-2(3H)-furanon, "Japonilure") eine deutliche Erhöhung der Gesamtzahl gefangener Käfer (wiederum durch die verstärkte Anlockung der Männchen) beobachtet (Ladd et al. (1981) Environ. Entomol. 74, 665-667). Die selektive Anlockung von Männchen durch (Z)-3-Hexen-1-ol und andere sogenannte Blattalkohole ist für den Japankäfer nicht beschrieben worden, Feldversuche, die mit dem Maikäfer aus der Gattung *Melolontha* (Unterfamilie Melolonthinae) durchgeführt worden, haben gezeigt, dass schwärmende Männchen wundinduzierte Pflanzenduftstoffe nutzen, um Weibchen zu lokalisieren, die zur gleichen Zeit auf den Wirtsbäumen weiterfressen und deren Fraß die Abgabe dieser Duftstoffe induziert. Die für dieses Phänomen verantwortlichen Verbindungen erwiesen sich als ubiquitär in grünen Pflanzen vorkommende Blattalkohole [(Z)-3-Hexen-1-ol, (E)-2-Hexen-1-ol, 1-Hexanol] (Reinecke et al. (2002) Naturwissenschaften 89, 265-269; Ruther et al. (2002) Ecol. Entomol. 27,76-83) Es war nicht zu erwarten, dass der Gartenlaubkäfer ebenfalls auf diese Duftstoffe reagiert, da er zum einen einer anderen Unterfamilie (Rutelinae) angehört und sich auch in der Biologie deutlich vom Maikäfer unterscheidet. So ist der Gartenlaubkäfer im Gegensatz zum Maikäfer ein überwiegender Blütenbesucher, während der Maikäfer Blattwerk bevorzugt; während dies die Attraktivität der von den grünen Blättern abgegebenen Hexanderivate auf den Maikäfer erklärt, bleibt die Wirkung auf den Gartenlaubkäfer überraschend. Der Gartenlaubkäfer ist tagaktiv, während der Maikäfer erst bei Einbruch der Dämmerung schwärmt. Weiterhin besucht der Gartenlaubkäfer andere Pflanzen als der Maikäfer, zeigt ein anderes Schwärm- und Paarungsverhalten als dieser, und somit lassen sich Erkenntnisse, die von Arbeiten mit dem Maikäfer stammen, nicht ohne weiteres auf andere Spezies übertragen.

Erfindungsgemäß bevorzugt hat die Zusammensetzung aus den Komponenten Terpenalkohol oder Terpenalkoholderivat: Eugenol oder Eugenolderivat bzw. Anethol oder Anetholderivat: Phenylverbindung ein Massenverhältnis 3:7:3 dieser Verbindungen. Erfindungsgemäß besonders bevorzugt hat eine Zusammensetzung aus Terpenalkohol oder Terpenallcoholderivat, Eugenol oder Eugenolderivat und Phenylverbindung, mit den Hexanderivaten und/oder deren Mischungen, bevorzugt (Z)-3-Hexen-1-ol, ein Massenverhältnis von ca. 0,1 zu 1 bis ca. 10 zu 1. Besonders bevorzugt ist ein Massenverhältnis von ca. 0,5 zu 1 bis ca. 2 zu 1. Ganz besonders bevorzugt ist ein Massenverhältnis von ca. 1 zu 1. Bevorzugt ist der Terpenalkohol Geraniol, und die Phenylverbindung ist bevorzugt 2-Phenylethylpropionat.

Ein weiterer Gegenstand der vorliegenden Erfindung ist die Verwendung der erfindungsgemäßen Zusammensetzung als Attraktans für Gartenlaubkäfer.

Ein weiterer Gegenstand der vorliegenden Erfindung ist eine Falle zum Einfangen von Insekten, bevorzugt zum Einfangen des Gartenlaubkäfers, umfassend die erfindungsgemäße Zusammensetzung. In einer Ausführungsform ist die Falle als Trichterfalle ausgebildet.

In einer Ausführungsform weist die Falle eine Oberfläche, bevorzugt eine Prallfläche, auf, die ganz oder teilweise gelb, weiß, orange, blau und/oder rot ist.

In einer Ausführungsform befindet sich die Falle in einer Position 0,5 bis 1,25 Meter über der Erdoberfläche am jeweiligen Ort, an dem die Falle aufgestellt ist.

Die Aufgabe der vorliegenden Erfindung wird ebenso gelöst durch ein Verfahren zum Anlocken von Gartenlaubkäfern, wobei mindestens eine Falle mit einer erfindungsgemäßen Zusammensetzung beködert ist. Zur Ausführung der Methode kommen handelsübliche Fallen bevorzugt Trichterfallen, wie sie beispielsweise für den Fang des Japankäfers seit langem gebräuchlich sind zur Anwendung (Ruther et al. (2000) Physiol. Entomol. 25, 172-179). Dem Fachmann ist klar, wie derartige Fallen zu konstruieren und anzuwenden sind. Durch Verwendung von handelsüblichen Dispensern (z.B. Langlock® Dispenser, Fa Wilhelm Biologischer Pflanzenschutz, Sachsenheim), die für die kontrollierte Verdampfung von Borkenkäferpheromonen konzipiert wurden, kann die erfindungsgemäße Zusammensetzung/ das erfindungsgemäße Attraktans bei einmaliger Beladung über eine komplette Flugsaison des Gartenlaubkäfers hinweg in aktiven Dosen verdampft werden.

Erfindungsgemäß bevorzugt ist im weiteren ein Verfahren, das eine Falle mit einer mindestens teilweise farbigen, bevorzugt gelben, blauen, orangen, roten und/oder weißen Oberfläche verwendet. Überraschenderweise wird durch die Verwendung farbiger, bevorzugt gelber, blauer, oranger, roter und/oder weißer Oberflächen, bevorzugt Prallflächen, nicht nur die Attraktivität von Blütenduftstoffen (z.B. das Gemisch aus Geraniol, Eugenol, 2-Phenylethylpropionat), sondern auch die der von grünen Blättern abgegebenen Hexanderivate (wie beispielsweise (Z)-3-hexen-1-ol) erhöht.

In einer weiteren Ausführungsform beinhaltet das Verfahren zumindest eine Falle, die sich in einer in einer Position von 0,5 bis 1,25 m über dem Boden befindet. Dem Fachmann ist bekannt, wie die Falle zu diesem Zwecke installiert werden muss.

### Abbildungen

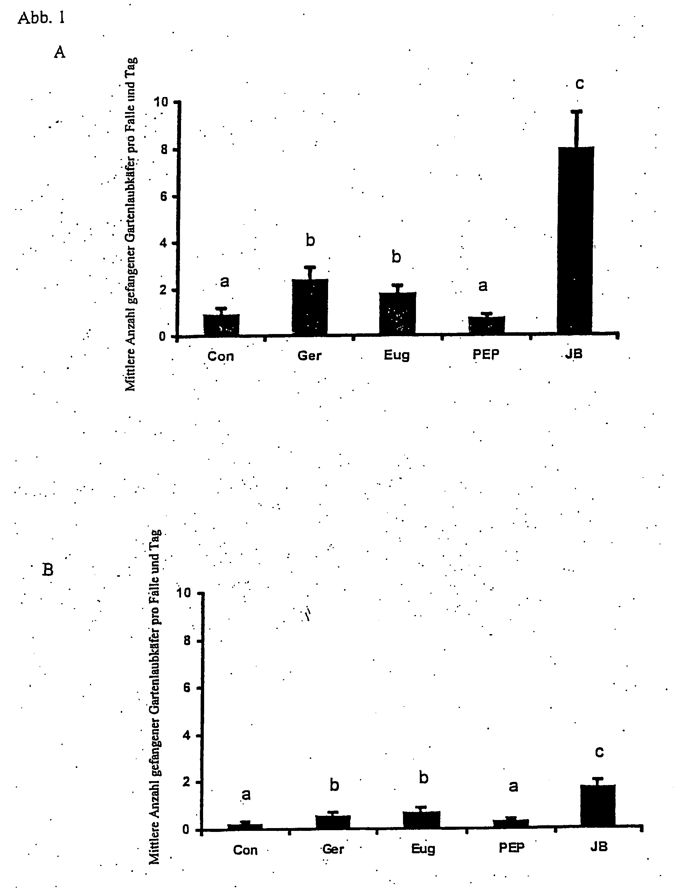

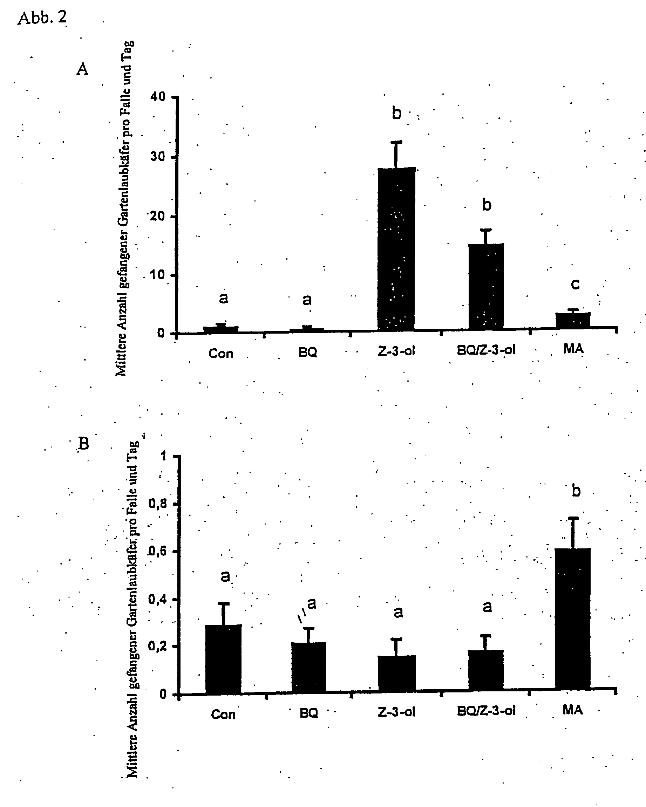

- Abb. 1: Mittlere Anzahl gefangener Gartenlaubkäfer (pro Falle und Tag ± Standardfehler, A. Männchen, B. Weibchen), die in unterschiedlich beköderten, grauen Trichterfallen gefangen wurden. Con = Kontrolle, Ger = Geraniol, Eug = Eugenol, PEP = 2-Phenylethylpropionat, JB = Duftstoffgemisch aus Geraniol, Eugenol, 2-Phenylethylpropionat im Verhältnis 3:7:3. Verschiedene kleine Buchstaben markieren signifikante Unterschiede zwischen den Behandlungen (2 Wege ANOVA, LSD-Test), d.h. Säulen die mit "a" gekennzeichnet sind, sind nicht signifikant unterschiedlich zueinander; Säulen, die mit "b" gekennzeichnet sind, sind nicht signifikant unterschiedlich zueinander etc. entsprechendes gilt für die übrigen Abbildungen 2 - 6.
- Abb. 2: Mittlere Anzahl gefangener Gartenlaubkäfer (pro Falle und Tag ± Standardfehler, A. Männchen, B. Weibchen),die in unterschiedlich beköderten, grauen Trichterfallen gefangen wurden. Con = Kontrolle, BQ = 1,4-Benzochinon, Z-3-ol = (Z)-3-Hexen-1-ol, BQ/ Z-3-ol = Lösung von 1,4-Benzochinon in (Z)-3-Hexen-1-ol; 20 mg/ml,MA = Methylanthranilat. Verschiedene Buchstaben markieren signifikante Unterschiede zwischen den Behandlungen (2 Wege ANOVA, LSD-Test).

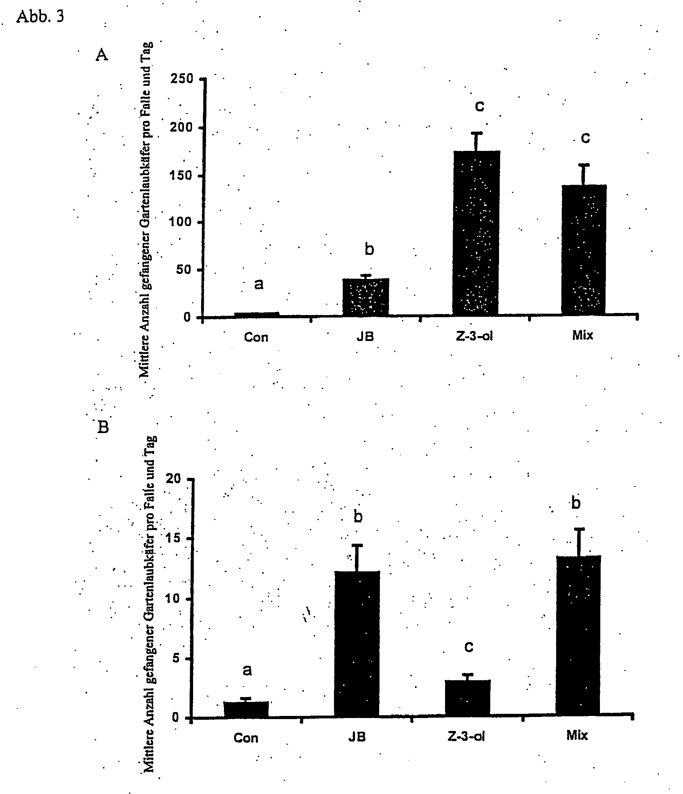

- Abb. 3: Abb. 3. Mittlere Anzahl gefangener Gartenlaubkäfer (pro Falle und Tag ± Standardfehler, A. Männchen, B. Weibchen), die in unterschiedlich beköderten, Trichterfallen mit gelben Prallflächen gefangen wurden. Con = Kontrolle, JB = Duftstoffgemisch aus Geraniol, Eugenol, 2-Phenylethylpropionat (3:7:3), Z-3-ol = (Z)-3-Hexen-1-ol, Mix = Mischung aus JB und Z-3-ol im Verhältnis 1:1. Verschiedene Buchstaben markieren signifikante Unterschiede zwischen den Behandlungen (2-Wege ANOVA, LSD-Test).

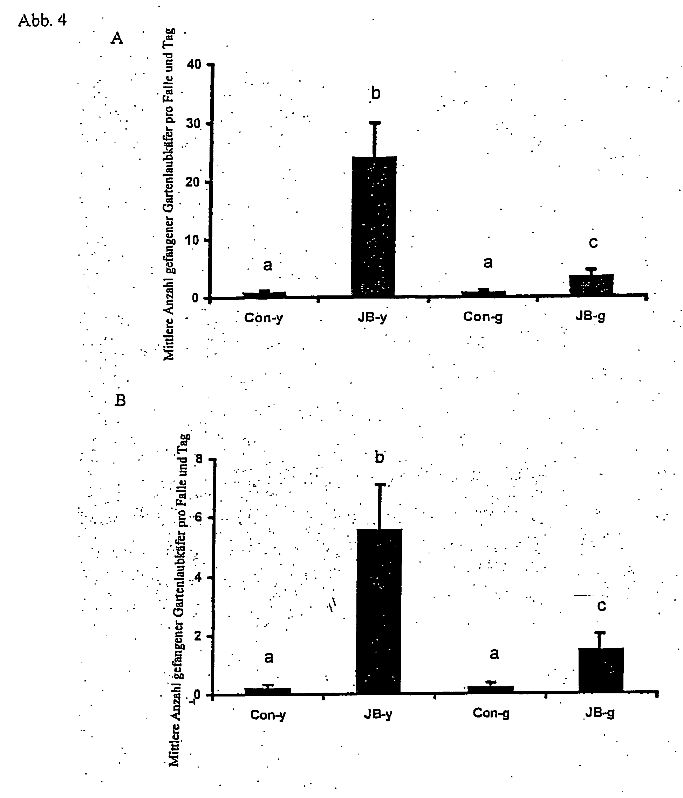

- Abb. 4: Mittlere Anzahl gefangener Gartenlaubkäfer (pro Falle und Tag ± Standardfehler, A. Männchen, B. Weibchen), die in unterschiedlich beköderten Trichterfallen gefangen wurden. y = Fallen mit gelben Prallflächen, g = Fallen mit grauen Prallflächen, Con = Kontrolle, JB = Duftstoffgemisch aus Geraniol, Eugenol, 2-Phenylethylpropionat (3:7:3). Verschiedene Buchstaben markieren signifikante Unterschiede zwischen den Behandlungen (2-Wege ANOVA, LSD-Test).

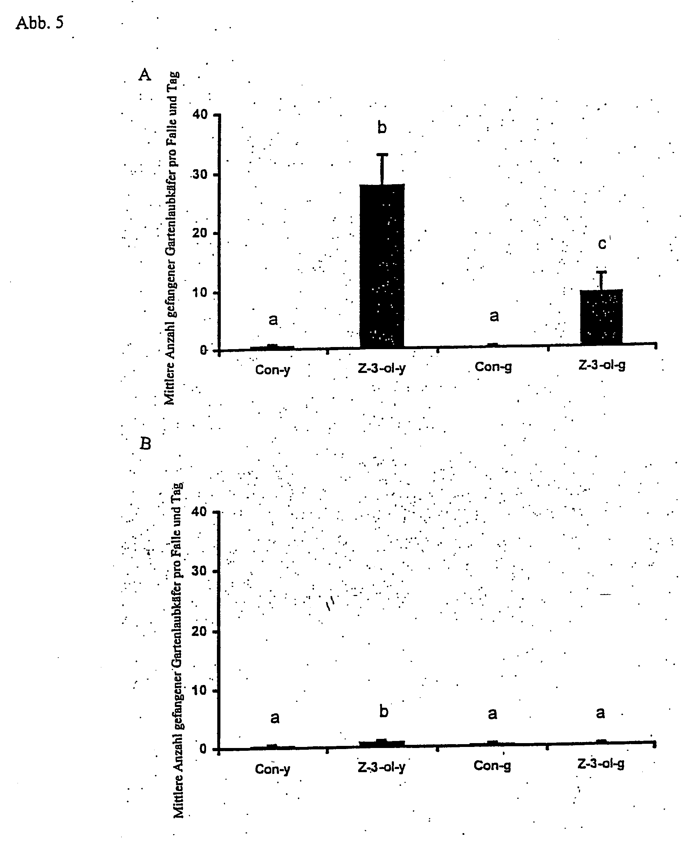

- Abb. 5: Mittlere Anzahl gefangener Gartenlaubkäfer (pro Falle und Tag ± Standardfehler, A. Männchen, B. Weibchen), die in unterschiedlich beköderten Trichterfallen gefangen wurden. y = Fallen mit gelben Trichtern, g = Fallen mit grauen Trichtern, Con = Kontrolle, Z-3-ol = (Z)-3-Hexen-1-ol. Verschiedene Buchstaben markieren signifikante Unterschiede zwischen den Behandlungen (2-Wege ANOVA, LSD-Test).

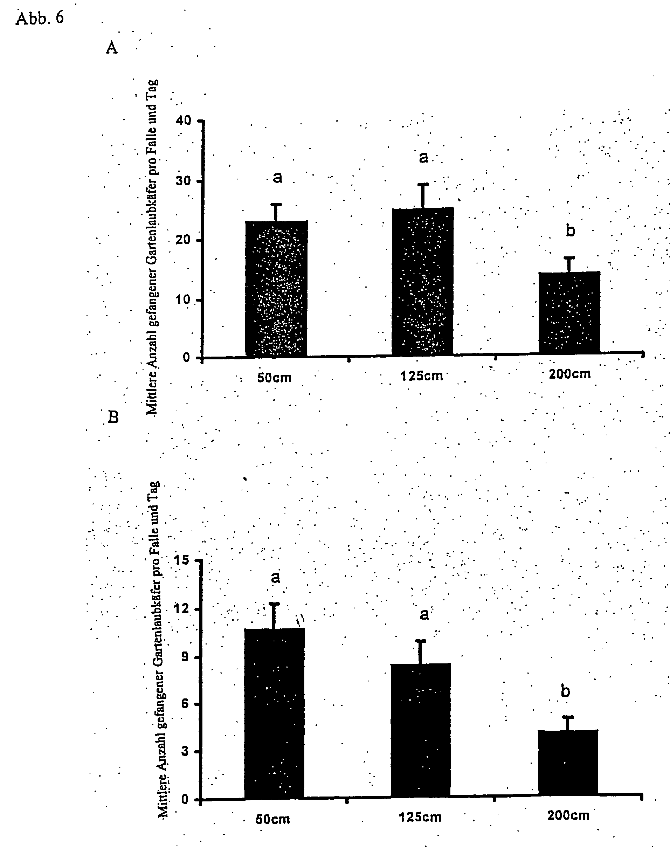

- Abb.6.: Mittlere Anzahl gefangener Gartenlaubkäfer (pro Falle und Tag ± Standardfehler, A. Männchen, B. Weibchen), die in Trichterfallen mit gelben Prallflächen gefangen wurden, welche in unterschiedlichen Höhen positioniert waren. Alle Fallen wurden mit dem JB-Köder (Duftstoffgemisch aus Geraniol, Eugenol, 2-Phenylethylpropionat im Verhältnis 3:7:3) bestückt. Verschiedene Buchstaben markieren signifikante Unterschiede zwischen den Behandlungen (2-Wege ANOVA, LSD-Test).

### Beispiele

Die hier beschriebenen Versuche wurden zwischen dem 28.05 und dem 16.06. 2003 auf dem Golfplatz Kallin nahe Nauen westlich von Berlin durchgeführt. Die verwendeten Trichterfallen (Höhe 47 cm) wurden ursprünglich zum Fang von Maikäfern konstruiert (für eine genaue Beschreibung vergleiche Ruther et al. (2000) Physiol. Entomol. 25, 172-179). Sie sind handelsüblichen Japankäferfallen (z.B. Trécé, Salinas, CA) nachempfunden. Für die Experimente 1 und 2 wurden Fallen mit grauen Prallflächen und für die Experimente 3 und 6 solche mit gelben Prallflächen verwendet. In den Experimenten 4 und 5 wurden Fallen mit grauen und gelben Prallflächen direkt miteinander verglichen. Zur Abgabe der Duftstoffe wurden Langlock® Membrandispenser der Firma Wilhelm Biologischer Pflanzenschutz (Sachsenheim) verwendet, die sich in früheren Arbeiten als sehr gut geeignet auch für relativ leicht flüchtige Duftstoffe erwiesen haben (Ruther & Hilker (2003) Entomol. Exp. Appl. 107: 141-147). Die Dispenser wurden mit 4 ml des jeweiligen Duftstoffes bzw. Duftstoffgemisches bestückt und kopfüber am oberen Ende der Prallflächen der Fallen angebracht. Die verwendeten Duftstoffe konnten so bei einmaliger Beladung der Dispenser bis zu 4 Wochen lang gleichmäßig durch die permeable Membran des Dispensers verdampfen. Für (Z)-3-Hexen-1-ol wurde in Laborversuchen bei 20 °C eine konstante Abgaberate von 50-60 mg/Tag bestimmt (Ruther & Hilker (2003) Entomol. Exp. Appl. 107: 141-147).

Für die Experimente wurden die mit den Duftstoffen bestückten Fallen senkrecht auf den Boden (Ausnahme Experiment 6; siehe unten) einer an die Spielbahnen angrenzenden Grasfläche gestellt und mit Stahlstangen, die neben den Fallen in den Boden gerammt wurden, gegen Umfallen gesichert. Je nach Experiment wurden die Fallen in randomisierten Blöcken von 3-5 Fallen arrangiert, wobei zwischen den Fallen eines Blockes und zwischen den Blöcken jeweils ein Abstand von mindestens 5 m eingehalten wurde. Die Position der Duftstoffdispenser entsprach in etwa der Flughöhe der schwärmenden Gartenlaubkäfer. Die Fallen wurden alle 1-3 Tage entleert und ausgezählt und das Geschlecht der gefangenen Käfer bestimmt. Nach dem Entleeren wurden die Fallen erneut randomisiert und wieder in Blöcken auf der Testfläche positioniert. Für jedes Experiment wurden die Fallen an mindestens drei Tagen ausgezählt. Zur Auswertung der einzelnen Experimente wurden die mittleren Fangzahlen pro Falle und Tag für Männchen und Weibchen bestimmt und nach log(x + 3/8)-Transformierung mittels 2-Wege-Varianzanalyse (ANOVA, Variable 1: Behandlung, Variable 2: Tag) und nachfolgendem LSD-Test miteinander verglichen (P ≤ 0.05) (Sachs (1992) angewandte Statistik, 7. Auflage, Springer Verlag Berlin)

### Experiment 1 (vergl. Abb. 1)

Die Reaktion von schwärmenden Gartenlaubkäfern auf folgende Duftstoffe/Duftstoffgemische wurde verglichen (n = 36 Wiederholungen):
a. Kontrolle (leerer Dispenser)
b. Geraniol
c. Eugenol
d. 2-Phenylethylpropionat
e. Duftstoffgemisch aus Geraniol, Eugenol, 2-Phenylethylpropionat (3:7:3)

### Experiment 2 (vergl. Abb. 2)

Die Reaktion von schwärmenden Gartenlaubkäfern auf folgende Duftstoffe/Duftstoffgemische wurde verglichen (n = 36 Wiederholungen):
a. Kontrolle (leerer Dispenser)
b. 1,4-Benzochinon (200mg)
c. (Z)-3-Hexen-1-ol
d. Lösung von 1,4-Benzochinon in (Z)-3-Hexen-1-ol, 20 mg/ml
e. Methylanthranilat.

### Experiment 3 (vergl. Abb. 3)

Die Reaktion von schwärmenden Gartenlaubkäfern auf folgende Duftstoffe/Duftstoffgemische wurde verglichen (n =18 Wiederholungen):
a. Kontrolle
b. Duftstoffgemisch aus Geraniol, Eugenol, 2-Phenylethylpropionat (3:7:3)
c. (Z)-3-Hexen-1-ol
d. Mischung aus den Duftstoffen a. und b. im Verhältnis 1:1 1

### Experiment 4 (vergl. Abb. 4)

Die Reaktion von schwärmenden Gartenlaubkäfern auf folgende Behandlungen wurde verglichen (n = 24 Wiederholungen):
a. Kontrolle 1: unbeköderte Fallen mit gelben Prallflächen
b. Kontrolle 2: unbeköderte Fallen mit grauen Prallflächen
c. Duftstoffgemisch aus Geraniol, Eugenol, 2-Phenylethylpropionat (3:7:3) in Fallen mit gelben Prallflächen
d. Duftstoffgemisch aus Geraniol, Eugenol, 2-Phenylethylpropionat (3:7:3) in Fallen mit grauen Prallflächen

### Experiment 5 (vergl. Abb. 5)

Die Reaktion von schwärmenden Gartenlaubkäfern auf folgende Behandlungen wurde verglichen (n =18 Wiederholungen):
e. Kontrolle 1: unbeköderte Fallen mit gelben Prallflächen
f. Kontrolle 2: unbeköderte Fallen mit grauen Prallflächen
e. (Z)-3-Hexen-1-ol in Fallen mit gelben Prallflächen
f. (Z)-3-Hexen-1-ol in Fallen mit grauen Prallflächen

### Experiment 6 (vergl. Abb. 6)

Die Reaktion von schwärmenden Gartenlaubkäfern auf ein Duftstoffgemisch aus Geraniol, Eugenol, 2-Phenylethylpropionat (3:7:3) in Fallen mit gelben Prallflächen wurde verglichen, wobei die Fallen eines Blockes in 3 verschiedenen Höhen an Stahlstangen fixiert wurden (angegeben ist die Abstand des Duftstoffdispensers vom Boden) (n = 21 Wiederholungen):
a. 50 cm
b. 125 cm
c. 200 cm

## Patentansprüche

1. Verwendung einer Zusammensetzung, enthaltend
- mindestens eine Phenylpropanverbindung, ausgewählt aus der Gruppe, umfassend Eugenol, Anthenol und Eugenolderivate ausgewählt aus der Gruppe umfassend Isoeugenol, Isoeugenylacetat, Isoeugenylmethylether, Isoeugenylphenylacetat, Eugenylacetat und Eugenylmethylether,
- mindestens eine Phenylverbindung ausgewählt aus der Gruppe, umfassend 2-Phenylethylpropionat, 2-Phenylethanol, 2-Phenylethylbutyrat und 2-Phenylethylacetat,
- mindestens ein Hexanderivat, ausgewählt ist aus der Gruppe, umfassend: (Z)-3-Hexen-1-ol, (E)-2-Hexen-1-ol, Hexan-1-ol, und
- mindestens eine Terpenverbindung, ausgewählt aus der Gruppe, umfassend Terpenalkohole und Terpenalkoholderivate, ausgewählt aus der Gruppe, umfassend Geraniol, Geranylformiat, Geranylacetat, Geranylpropionat, Geranylbenzoat, Geranylbutyrat, Geranylisovalevat, Geranyltiglat, Nerylformiat, Nerylacetat, Nerylpropionat, Nerylbenzoat, Nerylbutyrat, Nerylisovalerat, Neryltiglat, Linalylformiat, Linalylacetat, Linalylpropionat, Linalylbenzoat, Linalylbutyrat, Linalylisovalerat, Linalyltiglat, Citronellol, Citronellylformiat, Citronellylacetat, Citronellylpropionat, Citronellylbenzoat, Citronellylbutyrat, Citronellylisovalerat, Citronellyltiglat,
als Attraktans für Gartenlaubkäfer.

2. Verwendung nach Anspruch 1, **dadurch gekennzeichnet, dass** das mindestens eine Hexanderivat (Z)-3-Hexen-1-ol ist.

3. Verwendung nach Anspruch 1 oder 2, **dadurch gekennzeichnet, dass** die Zusammensetzung Eugenol, 2-Phenylethylpropionat, (Z)-3-Hexen-1-ol und Geraniol enthält.

4. Verwendung nach einem der Ansprüche 1-3, **dadurch gekennzeichnet, dass** die Zusammensetzung weiterhin Benzylalkohol und/oder Methylanthranilat umfaßt.

5. Verwendung nach einem der Ansprüche 1-4, **dadurch gekennzeichnet, daß** das Verhältnis von Terpenverbindung:Phenylpropanverbindung:Phenylverbindung 3:7:3 beträgt.

6. Verwendung nach einem der Ansprüche 1-5, **dadurch gekennzeichnet, daß** das Verhältnis der Mischung aus Phenylpropanverbindung/Phenylverbindung/Terpenverbindung zu Hexanderivat 10:1 1 zu 1:10 beträgt.

7. Verwendung nach einem der Ansprüche 1-6, **dadurch gekennzeichnet, dass** eine Falle, umfassend eine Zusammensetzung, wie in einem der Ansprüche 1-6 definiert, eingesetzt wird.

8. Verwendung nach Anspruch 7, **dadurch gekennzeichnet, daß** die Falle als Trichterfalle ausgebildet ist.

9. Verwendung nach einem der Ansprüche 7-8, **dadurch gekennzeichnet, daß** die Falle eine Oberfläche aufweist, die ganz oder teilweise gelb, weiß, orange, blau und/oder rot ist.

10. Verwendung nach Anspruch 9, **dadurch gekennzeichnet, dass** die Falle eine Prallfläche für Insekten aufweist, die ganz oder teilweise gelb , weiß, orange, blau und/oder rot ist.

11. Verwendung nach einem der Ansprüche 7 - 10, **dadurch gekennzeichnet, daß** die Falle sich in einer Position von 0,5 bis 1,25 Meter über der Erdoberfläche befindet.

12. Verwendung nach einem der Ansprüche 1-11, wobei mindestens eine Falle mit einer Zusammensetzung, wie in einem der Ansprüche 1 - 6 definiert, beködert ist.

13. Verwendung nach Anspruch 12, wobei die Falle wie in den Ansprüchen 8-11 definiert, ausgebildet ist.

14. Zusammensetzung, enthaltend
- mindestens eine Phenylpropanverbindung, ausgewählt aus der Gruppe, umfassend Eugenol, Anthenol und Eugenolderivate ausgewählt aus der Gruppe umfassend Isoeugenol, Isoeugenylacetat, Isoeugenylmethylether, Isoeugenylphenylacetat, Eugenylacetat und Eugenylmethylether,
- mindestens eine Phenylverbindung ausgewählt aus der Gruppe, umfassend 2-Phenylethylpropionat, 2-Phenylethanol, 2-Phenylethylbutyrat und 2-Phenylethylacetat,
- mindestens ein Hexanderivat, ausgewählt ist aus der Gruppe, umfassend: (Z)-3-Hexen-1-ol, (E)-2-Hexen-1-ol, Hexan-1-ol, und
- mindestens eine Terpenverbindung, ausgewählt aus der Gruppe, umfassend Terpenalkohole und Terpenalkoholderivate, ausgewählt aus der Gruppe, umfassend Geraniol, Geranylformiat, Geranylacetat, Geranylpropionat, Geranylbenzoat, Geranylbutyrat, Geranylisovalevat, Geranyltiglat, Nerylformiat, Nerylacetat, Nerylpropionat, Nerylbenzoat, Nerylbutyrat, Nerylisovalerat, Neryltiglat, Linalylformiat, Linalylacetat, Linalylpropionat, Linalylbenzoat, Linalylbutyrat, Linalylisovalerat, Linalyltiglat, Citronellol, Citronellylformiat, Citronellylacetat, Citronellylpropionat, Citronellylbenzoat, Citronellylbutyrat, Citronellylisovalerat, Citronellyltiglat,
wobei das Verhältnis von Terpenverbindung : Phenylpropanverbindung : Phenylverbindung 3:7:3 beträgt.

15. Zusammensetzung nach Anspruch 14, **dadurch gekennzeichnet, dass** das mindestens eine Hexanderivat (Z)-3-Hexen-1-ol ist.

16. Zusammensetzung nach Anspruch 14 oder 15, enthaltend Eugenol, 2-Phenylethylpropionat, (Z)-3-Hexen-1-ol und Geraniol.

17. Zusammensetzung nach einem der Ansprüche 14 - 16, weiterhin umfassend Benzylalkohol und/oder Methylanthranilat.

18. Zusammensetzung nach einem der Ansprüche 14 - 17, **dadurch gekennzeichnet, daß** das Verhältnis der Mischung aus Phenylpropanverbindung/Phenylverbindung/Terpenverbindung zu Hexanderivat 10:1 1 zu 1:10 beträgt.

19. Falle zum Einfangen von Insekten, bevorzugt zum Einfangen des Gartenlaubkäfers, umfassend eine Zusammensetzung nach einem der Ansprüche 14 - 18,.

20. Falle nach Anspruch 19, **dadurch gekennzeichnet, daß** sie als Trichterfalle ausgebildet ist.

21. Falle nach einem der Ansprüche 19-20, **dadurch gekennzeichnet, daß** die Falle eine Oberfläche aufweist, die ganz oder teilweise gelb, weiß, orange, blau und/oder rot ist.

22. Falle nach Anspruch 21, **dadurch gekennzeichnet, dass** die Falle eine Prallfläche für Insekten aufweist, die ganz oder teilweise gelb , weiß, orange, blau und/oder rot ist.

23. Falle nach einem der Ansprüche 19 - 22, **dadurch gekennzeichnet, daß** sie sich in einer Position von 0,5 bis 1,25 Meter über der Erdoberfläche befindet.

24. Verwendung einer Zusammensetzung nach einem der Ansprüche 14 - 18 als Attraktans für Gartenlaubkäfer.

## Claims

1. Use of a composition containing
- at least one phenylpropane compound, selected from the group comprising eugenol, anthenol and eugenol derivatives, chosen from the group comprising isoeugenol, isoeugenyl acetate, isoeugenol methyl ether, isoeugenylphenylacetate, eugenyl acetate and eugenyl methyl ether;
- at least one phenyl compound selected from the group comprising 2-phenylethyl propionate, 2-phenylethanol, 2-phenylethyl butyrate and 2-phenylethyl acetate;
- at least one hexane derivative, chosen from the group comprising: (Z)-3-hexen-1-ol, (E)-2-hexen-1-ol, hexan-1-ol; and
- at least one terpene compound, selected from the group comprising terpene alcohols and terpene alcohol derivatives, chosen from the group comprising geraniol, geranylformate, geranyl acetate, geranyl propionate, geranyl benzoate, geranyl butyrate, geranylisovalerate, geranyltiglate, nerylformate, neryl acetate, neryl propionate, neryl benzoate, neryl butyrate, nerylisovalerate, neryltiglate, linalylformate, linalyl acetate, linalyl propionate, linalyl benzoate, linalyl butyrate, linalylisovalerate, linalyltiglate, citronellol, citronellylformate, citronellyl acetate, citronellyl propionate, citronellyl benzoate, citronellyl butyrate, citronellylisovalerate and citronellyltiglate,
as an attractant for garden chafers.

2. Use in accordance with claim 1, **characterised in that** said at least one hexane derivative is (Z)-3-hexen-1-ol.

3. Use in accordance with claim 1 or 2, **characterised in that** said composition contains eugenol, 2-phenylethyl propionate, (Z)-3-hexen-1-ol and geraniol.

4. Use in accordance with any one of claims 1 to 3, **characterised in that** said composition furthermore contains benzyl alcohol and/or methyl anthranilate.

5. Use in accordance with any one of claims 1 to 4, **characterised in that** the ratio of terpene compound: phenylpropanecompound : phenyl compound amounts to 3:7:3.

6. Use in accordance with any one of claims 1 to 5, **characterised in that** the ratio of the mixture of phenylpropane compound/phenyl compound/terpene compound to hexane derivative amounts to 10:1 to 1:10.

7. Use in accordance with any one of claims 1 to 6, **characterised in that** a trap comprising a composition as defined in any one of claims 1 to 6 is utilised.

8. Use in accordance with claim 7, **characterised in that** the trap is designed as a funnel trap.

9. Use in accordance with any one of claims 7 to 8, **characterised in that** the trap has a surface which is wholly or partially yellow, white, orange, blue and/or red.

10. Use in accordance with claim 9, **characterised in that** the trap has a deflector surface for insects, which is wholly or partially yellow, white, orange, blue and/or red.

11. Use in accordance with any one of claims 7 to 10, **characterised in that** the trap is located in a position of 0.5 to 1.25 metres above the surface of the earth.

12. Use in accordance with any one of claims 1 to 11, wherein at least one trap having a composition as defined in any one of claims 1 to 6 is baited.

13. Use in accordance with claim 12, wherein the trap is designed as defined in claims 8 to 11.

14. A composition containing
- at least one phenylpropane compound, selected from the group comprising eugenol, anthenol and eugenol derivatives, chosen from the group comprising isoeugenol, isoeugenyl acetate, isoeugenol methyl ether, isoeugenylphenylacetate, eugenyl acetate and eugenyl methyl ether;
- at least one phenyl compound selected from the group comprising 2-phenylethyl propionate, 2-phenylethanol, 2-phenylethyl butyrate and 2-phenylethyl acetate;
- at least one hexane derivative, chosen from the group comprising: (Z)-3-hexen-1-ol, (E)-2-hexen-1-ol, hexan-1-ol; and
- at least one terpene compound, selected from the group comprising terpene alcohols and terpene alcohol derivatives, chosen from the group comprising geraniol, geranylformate, geranyl acetate, geranyl propionate, geranyl benzoate, geranyl butyrate, geranylisovalerate, geranyltiglate, nerylformate, neryl acetate, neryl propionate, neryl benzoate, neryl butyrate, nerylisovalerate, neryltiglate, linalylformate, linalyl acetate, linalyl propionate, linalyl benzoate, linalyl butyrate, linalylisovalerate, linalyltiglate, citronellol, citronellylformate, citronellyl acetate, citronellyl propionate, citronellyl benzoate, citronellyl butyrate, citronellylisovalerate and citronellyltiglate,
wherein the ratio of terpene compound : phenylpropane compound : phenyl compound amounts to 3:7:3.

15. A composition according to claim 14, **characterised in that** said at least one hexane derivative is (Z)-3-hexen-1-ol.

16. A composition according to claim 14 or 15, containing eugenol, 2-phenylethyl propionate, (Z)-3-hexen-1-ol and geraniol.

17. A composition according to any one of claims 14 to 16, furthermore containing benzyl alcohol and/or methyl anthranilate.

18. A composition according to any one of claims 14 to 17, **characterised in that** the ratio of the mixture of phenylpropane compound/phenyl compound/terpene compound to hexane derivative amounts to 10:1 1 to 1:10.

19. A trap for catching insects, preferably for catching the garden chafer, comprising a composition in accordance with one of claims 14-18.

20. A trap according to claim 19, **characterised in that** it is designed as a funnel trap.

21. A trap according to any one of claims 19 to 20, **characterised in that** the trap has a surface which is wholly or partially yellow, white, orange, blue and/or red.

22. A trap according to claim 21, **characterised in that** the trap has a deflector surface for insects which is wholly or partially yellow, white, orange, blue and/or red.

23. A trap according to any one of claims 19 to 22, **characterised in that** it is located in a position of 0.5 to 1.25 metres above the surface of the earth.

24. Use of a composition according to any one of claims 14 to 18 as an attractant for garden chafers.

## Revendications

1. Utilisation d'une composition contenant
- au moins un composé de phénylpropane choisi dans le groupe comprenant l'eugénol, l'anthénol et les dérivés de l'eugénol choisis dans le groupe comprenant l'isoeugénol, l'acétate d'isoeugényle, le méthyléther d'isoeugényle, le phénylacétate d'isoeugényle, l'acétate d'eugényle et le méthyléther d'eugényle,
- au moins un composé de phényle choisi dans le groupe comprenant le propionate de 2-phényléthyle, le 2-phényléthanol, le butyrate de 2-phényléthyle et l'acétate de 2-phényléthyle,
- au moins un dérivé de l'hexane choisi dans le groupe comprenant :
le (Z)-3-hexén-1-ol, le (E)-2-hexén-1-ol, l'hexan-1-ol, et
- au moins un composé de terpène choisi dans le groupe comprenant les alcools de terpène et les dérivés d'alcools de terpène choisis dans le groupe comprenant le géraniol, le formiate de géranyle, l'acétate de géranyle, le propionate de géranyle, le benzoate de géranyle, le butyrate de géranyle, l'isovalérate de géranyle, le tiglate de géranyle, le formiate de néryle, l'acétate de néryle, le propionate de néryle, le benzoate de néryle, le butyrate de néryle, l'isovalérate de néryle, le tiglate de néryle, le formiate de linalyle, l'acétate de linalyle, le propionate de linalyle, le benzoate de linalyle, le butyrate de linalyle, l'isovalérate de linalyle, le tiglate de linalyle, le citronellol, le formiate de citronellyle, l'acétate de citronellyle, le propionate de citronellyle, le benzoate de citronellyle, le butyrate de citronellyle, l'isovalérate de citronellyle, le tiglate de citronellyle,
comme agent attirant pour le hanneton horticole.

2. Utilisation selon la revendication 1, **caractérisée en ce que** le au moins un dérivé de l'hexane est le (Z)-3-hexén-1-ol.

3. Utilisation selon la revendication 1 ou 2, **caractérisée en ce que** la composition contient de l'eugénol, du propionatede 2-phényléthyle, du (Z)-3-hexén-1-ol et du géraniol.

4. Utilisation selon l'une des revendications 1-3, **caractérisée en ce que** la composition comprend en outre de l'alcool benzylique et/ou de l'anthranilate de méthyle.

5. Utilisation selon l'une des revendications 1-4, **caractérisée en ce que** le rapport composé de terpène : composé de phénylpropane : composé de phényle est 3:7:3.

6. Utilisation selon l'une des revendications 1-5, **caractérisée en ce que** le rapport du mélange du composé de phénylpropane/composé de phényle/composé de terpène au dérivé de l'hexane est 10:1 à 1:10.

7. Utilisation selon l'une des revendications 1-6, **caractérisée en ce qu'**un piège comprenant une composition telle que définie dans l'une des revendications 1-6 est utilisé.

8. Utilisation selon la revendication 7, **caractérisée en ce que** le piège est agencé sous forme de piège en entonnoir.

9. Utilisation selon l'une des revendications 7-8, **caractérisée en ce que** le piège présente une surface qui est totalement ou partiellement jaune, blanche, orange, bleue et/ou rouge.

10. Utilisation selon la revendication 9, **caractérisée en ce que** le piège comporte une surface d'impact pour insectes qui est totalement ou partiellement jaune, blanche, orange, bleue et/ou rouge.

11. Utilisation selon l'une des revendications 7-10, **caractérisée en ce que** le piège se trouve dans une position de 0,5 à 1,25 m au-dessus de la surface du sol.

12. Utilisation selon l'une des revendications 1-11, où au moins un piège est appâté avec une composition telle que définie dans l'une des revendications 1-6.

13. Utilisation selon la revendication 12, où le piège est agencé comme défini dans les revendications 8-11.

14. Composition contenant
- au moins un composé de phénylpropane choisi dans le groupe comprenant l'eugénol, l'anthénol et les dérivés de l'eugénol choisis dans le groupe comprenant l'isoeugénol, l'acétate d'isoeugényle, le méthyléther d'isoeugényle, le phénylacétate d'isoeugényle, l'acétate d'eugényle et le méthyléther d'eugényle,
- au moins un composé de phényle choisi dans le groupe comprenant le propionate de 2-phényléthyle, le 2-phényléthanol, le butyrate de 2-phényléthyle et l'acétate de 2-phényléthyle,
- au moins un dérivé de l'hexane choisi dans le groupe comprenant :
le (Z)-3-hexén-1-ol, le (E)-2-hexén-1-ol, l'hexan-1-ol, et
- au moins un composé de terpène choisi dans le groupe comprenant les alcools de terpène et les dérivés d'alcools de terpène choisis dans le groupe comprenant le géraniol, le formiate de géranyle, l'acétate de géranyle, le propionate de géranyle, le benzoate de géranyle, le butyrate de géranyle, l'isovalérate de géranyle, le tiglate de géranyle, le formiate de néryle, l'acétate de néryle, le propionate de néryle, le benzoate de néryle, le butyrate de néryle, l'isovalérate de néryle, le tiglate de néryle, le formiate de linalyle, l'acétate de linalyle, le propionate de linalyle, le benzoate de linalyle, le butyrate de linalyle, l'isovalérate de linalyle, le tiglate de linalyle, le citronellol, le formiate de citronellyle, l'acétate de citronellyle, le propionate de citronellyle, le benzoate de citronellyle, le butyrate de citronellyle, l'isovalérate de citronellyle, le tiglate de citronellyle,
où le rapport composé de terpène : composé de phénylpropane : composé de phényle est 3:7:3.

15. Composition selon la revendication 14, **caractérisée en ce que** le au moins un dérivé de l'hexane est le (Z)-3-hexén-1-ol.

16. Composition selon la revendication 14 ou 15, contenant de l'eugénol, du propionatede 2-phényléthyle, du (Z)-3-hexén-1-ol et du géraniol.

17. Composition selon l'une des revendications 14-16, comprenant en outre de l'alcool benzylique et/ou de l'anthranilate de méthyle.

18. Composition selon l'une des compositions 14-17, **caractérisée en ce que** le rapport du mélange de composé de phénylpropane/composé de phényle/composé de terpène au dérivé de l'hexane est 10:1 à 1:10.

19. Piège pour capturer des insectes, de préférence pour capturerle hanneton horticole, comprenant une composition selon l'une des revendications 14-18.

20. Piège selon la revendication 19, **caractérisé en ce qu'**il est agencé sous forme de piège en entonnoir.

21. Piège selon l'une des revendications 19-20, **caractérisé en ce que** le piège comporte une surface qui est totalement ou partiellement jaune, blanche, orange, bleue et/ou rouge.

22. Piège selon la revendication 21, **caractérisé en ce que** le piège comporte une surface d'impact pour les insectes qui est totalement ou partiellement jaune, blanche, orange, bleue et/ou rouge.

23. Piège selon l'une des revendications 19-22, **caractérisé en ce qu'**il se trouve dans une position de 0,5 à 1,25 mètre au-dessus de la surface du sol.

24. Utilisation d'une composition selon l'une des revendications 14-18 comme agent attirant pour le hanneton horticole.
